(19) Europäisches Patentamt
European Patent Office
Office européen des brevets

(11) Publication number: **0 322 560 A2**

(12) **EUROPEAN PATENT APPLICATION**

(21) Application number: **88119322.1**

(22) Date of filing: **21.11.88**

(51) Int. Cl.⁴: **C08L 77/00 , C08L 51/00 , C08L 33/06 , C08L 25/08**

(30) Priority: **30.12.87 US 139481**

(43) Date of publication of application: **05.07.89 Bulletin 89/27**

(84) Designated Contracting States: **DE FR GB IT NL**

(71) Applicant: **GENERAL ELECTRIC COMPANY**
**1 River Road**
**Schenectady New York 12305(US)**

(72) Inventor: **Clagett, Donald Carl**
**193 Barlett Avenue**
**Pittsfield Massachusetts 01201(US)**
Inventor: **Maresca, Louis Michael**
**100 East Covent Garden**
**Guilderland New York 12084(US)**
Inventor: **Shafer, Sheldon Jay**
**40 Day Street**
**Pittsfield Massachusetts 01201(US)**

(74) Representative: **Catherine, Alain**
**General Electric France Service de Propriété**
**Industrielle 18 Rue Horace Vernet B.P. 76**
**F-92134 Issy-les-Moulineaux Cédex(FR)**

(54) **Compositions comprising thermoplastic acrylate-crosslinked vinyl aromatic interpolymer elastomers and polyamides.**

(57) Thermoplastic compositions comprising (i) a thermoplastic elastomer comprising a crosslinked (meth)-acrylate phase and a crosslinked interpenetrating phase comprising a polymerized vinyl aromatic, alone, or in further combination with a polymerized acrylonitrile and (ii) polyamide resins because of their polyamide content have improved solvent resistance, wear resistance and high temperature capabilities. If the polyamide is an amorphous polyamide, the compositions have improved barrier properties. The thermoplastic elastomer component contributes improved impact resistance, weatherability, improved processability and lower water absorption.

EP 0 322 560 A2

# COMPOSITIONS COMPRISING THERMOPLASTIC ACRYLATECROSSLINKED VINYL AROMATIC INTER-POLYMER ELASTOMERS AND POLYAMIDES

Thermoplastic resin compositions having Improved impact strength, thermal properties and chemical resistance are provided by combining a polyamide resin and a thermoplastic elastomer comprising a crosslinked acrylate phase and a crosslinked interpenetrating phase comprising a vinyl aromatic, alone, or in further combination with an acrylonitrile.

## BACKGROUND OF THE INVENTION

Polyamides, more commonly referred to as nylons, are thermoplastic materials which feature repeating amide groups. They are generally semi-crystalline, have superior load-bearing capability at elevated temperatures, excellent chemical resistance, and low frictional resistance. Amorphous polyamide resins are transparent, although they can be tinted or colored opaquely.

Acrylate-styrene-acrylonitrile polymers (abbreviated "ASA") are well known in the art for their good impact properties and superior weather durability. Thermoplastic elastomers comprising a crosslinked acrylate phase interpenetrated by a crosslinked phase comprising a vinyl aromatic compound, alone, or in further combination with an acrylonitrile are generally disclosed in Yu et al. U.S. 3,944,631. Such ASA compositions have been used mainly as impact modifiers, although the properties of the aforementioned core-shell modifiers of Yu et al indicate that they might have applications in the thermoplastic elastomer area. For instance, although these compositions are highly crosslinked, they show good processing properties.

It has now been surprisingly discovered that thermoplastic compositions comprising a thermoplastic elastomer comprising a rubbery polyacrylate phase and a cross-linked interpenetrating phase comprising a polymerized vinyl aromatic, alone, or in further combination with a polymerized acrylonitrile, and a polyamide resin when combined in a wide composition range exhibit unexpected and advantageous properties over the use of either component alone. The polyamide component provides solvent resistance, wear resistance and high temperature capabilities, while the thermoplastic elastomer component contributes improved impact resistance, weatherability, improved processability and lower water absorption. Moreover, when the polyamide is an amorphous polyamide, the composition also exhibits improved barrier properties.

## SUMMARY OF THE INVENTION

According to the present invention, there are provided thermoplastic compositions comprising

(i) a thermoplastic elastomer comprising a crosslinked acrylate phase and an interpenetrating crosslinked phase comprising a polymerized vinyl aromatic, alone, or in further combination with a polymerized acrylonitrile; and

(ii) a polyamide resin.

The present thermoplastic composition can be widely varied with respect to the relative amounts of components (i) and (ii). In general, the present thermoplastic composition may comprise from about 1 to about 99 percent by weight of component (i) and from about 99 to about 1 percent by weight of component (ii) per combined weight of (i) and (ii). However, it is preferred that component (i) comprises from about 20 to about 80 percent by weight and component (ii) comprises from about 80 to about 20 percent by weight per combined weight of components (i) and (ii).

## DETAILED DESCRIPTION OF THE INVENTION

The preferable thermoplastic elastomers comprising component (i) of the present invention are those having a crosslinked alkyl acrylate rubber phase, such as poly(butyl acrylate). Associated with this crosslinked phase is a phase comprising crosslinked polymerized vinyl aromatic resin, preferably styrene,

or styrene and acrylonitrile which interpenetrates the crosslinked acrylate phase. Incorporation of small amounts of other monomers such as methyl methacrylate within the interpenetrating phase can also provide useful products if the resulting copolymer phase does not cause significant incompatibility with the polyamide resin. The integrity of such preferable diphasic structures is maintained by the interpenetrating network of the several crosslinked moieties rather than by grafting the structures together. The interpenetrating network is provided when the monomers forming the vinyl aromatic phase are polymerized and crosslinked in the presence of the previously polymerized and crosslinked acrylate phase.

The diphasic interpolymer compositions may be formed by the following type of two-step, sequential polymerization process:

1. emulsion polymerizing an acrylate monomer charge (herein designated "acrylate", for purposes of the present invention), of at least one $C_2$-$C_{10}$ alkyl acrylate, $C_2$-$C_{10}$ alkyl methacrylate, or compatible mixtures thereof, in an aqueous polymerization medium in the presence of an effective amount of a suitable di- or polyethyleneically unsaturated crosslinking agent for such type of monomer, with the $C_4$-$C_8$ alkyl acrylates being the preferred acrylate monomers for use in this step;

2. emulsion polymerizing a monomer charge of styrene or styrene and an acrylonitrile in an aqueous polymerization medium, also in the presence of an effective amount of a suitable di- or polyethyleneically unsaturated crosslinking agent for such monomers, said polymerization being carried out in the presence of the product from Step 1 so that the crosslinked alkyl acrylate and crosslinked styrene components form an interpolymer wherein the respective phases penetrate one another.

Such a two-stage polymerization process is related to but not the same as the three step process for producing an acrylate-styrene-acrylonitrile (ASA) terpolymer, as taught by Yu et al. in U.S. 3,944,631, because the latter produces an uncrosslinked phase, too.

The diphasic product, generally comprises from about 40% to about 90% by weight of at least one of the above-identified crosslinked acrylates, and from about 10% to about 60% by weight of the crosslinked vinyl aromatic component. It contains little graft polymerization between the crosslinked styrenic copolymer components and the crosslinked acrylate polymeric component. In the preferred embodiments, the first phase will comprise from about 50 to about 80 weight percent crosslinked acrylate, based on the weight of crosslinked first phase and crosslinked interpenetrating phase taken together. Further details regarding this type of polymer composition can be found in the aforementioned U.S. 3,044,731. The interpolymer provided by stopping the Yu et al. process after the second stage can be isolated and dried by conventional means and can be provided in powder or pellet form.

The polyamides utilized as component (ii) in this invention can be crystalline, amorphous or semicrystalline.

Examples of polyamides contemplated to be useful in this invention include, but are not limited to, those having repeating units of a formula selected from the group

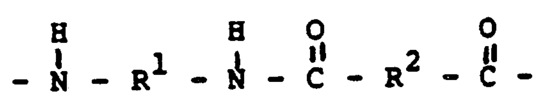

and

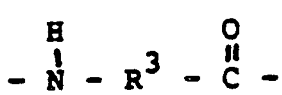

wherein $R^1$, $R^2$ and $R^3$ are the same or different divalent organic radicals selected from the group consisting of $C_2$-$C_{15}$ alkylene radicals, $C_3$-$C_{18}$ cycloalkylene radicals and $C_6$-$C_{20}$ arylene radicals. Mixed alkylene-cycloalkylene radicals of $C_4$-$C_{30}$ are also considered to be within the scope of the terms "cycloalkylene" and "arylene", respectively.

These polyamides may be prepared by polymerization of a diamine having the formula

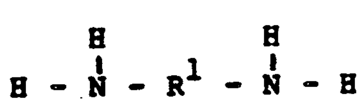

with a dicarbonyl compound such as a dicarboxylic acid, ester or chloride of the formula

$$X-\overset{\overset{O}{\|}}{C}-R^2-\overset{\overset{O}{\|}}{C}-X$$

wherein X is chlorine, hydroxy, $C_1$-$C_6$ alkoxy or $C_6$-$C_{20}$ aryloxy and $R^1$ and $R^2$ are as defined above. Typically, equimolar portions of the diamine and dicarboxylic acid are utilized. Slight departures from the equimolar proportions can be tolerated. Examples of suitable diamines include ethylenediamine, trimethylenediamine, tetramethylenediamine, pentamethylenediamine, hexamethylenediamine, octamethylenediamine, isomeric trimethylhexamethylenediamine, 2,2-bis(p-aminocyclohexyl)propane, bis(4-aminocyclohexyl)methane, bis(4-amino-3-methylcyclohexyl)methane, bis(4-aminophenyl)methane, meta-phenylenediamine, para-phenylenediamine, metaxylylenediamine, para-xylylenediamine and the like.

Suitable dicarboxylic acids/esters include sebacic acid, suberic acid, glutaric acid, pimelic acid, adipic acid, terephthalic acid, isophthalic acid, and azelaic acid.

An alternative method for preparing the polyamides utilized in this invention is to polymerize monoamino-monocarbonyl compound of the formula:

$$X-\overset{\overset{O}{\|}}{C}-R^3-\overset{\overset{H}{|}}{N}-H$$

wherein X and $R^3$ are as defined above. Lactam structures for these monoamine-monocarboxylic acids may also be utilized. The lactam structures are ring structures formed by self-reaction of the amine and acid groups. Examples of these monoamino-monocarboxylic acids and acids and their lactams include: aminocaproic acid, butyrolactam, pivalolactam, caprolactam, capryllactam, enantholactam, undecanolactam, dodecanolactam, 3-aminobenzoic acid and 4-aminobenzoic acid. Mixtures of the lactams with diamines and dicarboxylic acids, and their derivatives will also produce polyamides suitable for this invention. Mixtures, random copolymers or block copolymers of two or more of the polyamides are within the scope of this invention also, as well as blends of crystalline and amorphous polyamides.

Preferred polyamides include nylons 6, 6/6, 11, 12, 6/3, 4/6, 6/4, 6/9, 6/10 and 6/16. Also, preferred combinations of diacid and diamine include terephthalic acid with trimethylhexamethylenediamine; isophthalic acid with trimethylhexamethylenediamine; adipic acid plus azelaic acid with 2,2-bis-(p-aminocyclohexyl)propane; terephthalic acid with bis(4-aminocyclohexyl)methane; isophthalic acid with hexamethylenediamine . and terephthalic acid and isophthalic acid with hexamethylenediamine and combinations thereof. Particular examples of amorphous polyamides suitable for the use in this invention include, but are not limited to

PACP-9/6, which is a 50:50 mole ratio copolymer of 2,2′-bis(4-aminocyclohexyl)propane and a 60/40 weight percent mixture of azelaic acid and adipic acid. A more detailed description of the preparation of this polymer is found in U.S. Patent No. 3,840,501 which is incorporated herein by reference.

Zytel• 330 and Selar PA•, which are polyamides derived from hexamethylene diamine and mixtures of terephthalaic acid and isophthalic acid. These amorphous polyamides are available from E.I. duPont.

Grilamid• TR 55, which is a polyamide derived from isophthalic acid/bis-(4-amino-3-methylcyclohexyl) methane/lauryl lactam and is available from Emser Industries.

Trogamid• T, which is derived from dimethyl terephthalate and a mixture of 2,2,4- and 2,4,4-trimethylhexamethylenediamine and is available from Dynamit Nobel.

In general, it is true that all polyamides have both a crystalline and an amorphous state. However, as a practical matter, it is difficult to obtain many of the polyamides in the amorphous state. Symmetrical, hydrogen-bonded, linear polyamides are, invariably, highly crystalline with well defined x-ray patterns. Thus, it is difficult to avoid high degrees of crystallinity with polymers, e.g., nylon-6,6; -6,10; and -6, whose regular structures permit good chain alignment and high degrees of hydrogen bonding in the planes of the chains. Chain stiffness also contributes to crystallinity, rendering hydrogen bonding unnecessary for crystallinity where chain stiffness and symmetry are sufficiently high. Ring-containing polyamides, especially aromatic ring-containing polyamides such as polyterephthalamides, have high stiffness and tend to crystallinity.

Thus, it is within the skill of persons knowledgeable in the art to produce amorphous polyamides through any one or a combination of several methods. Faster polyamide melt cooling tends to result in an increasingly amorphous resin. Side chain substitutions on the polymer backbone, such as the use of a methyl group to disrupt regularity and hydrogen bonding, may be employed. Non-symmetric monomers, for instance, odd-chain diamines or diacids and meta aromatic substitution, may prevent crystallization.

Symmetry may also be disrupted through copolymerization, that is, using more than one diamine, diacid or monoamino-monocarboxylic acid to disrupt regularity. In the case of copolymerization, monomers which normally may be polymerized to produce crystalline homopolymer polyamides, for instance, nylon 6;6/6; 11; 12; 6/3; 6/4; 6/10; or 6/12, may be copolymerized to produce a random amorphous copolymer. Amorphous polyamides for use herein are generally transparent with no distinct melting point, and the heat of fusion is about 1 cal/gram or less. The heat of fusion may be conveniently determined by use of a differential scanning calorimeter (DSC).

It is also to be understood that the use of the term "polyamides" herein and in the appended claims is intended to include the toughened or super tough polyamides. Super tough polyamides, or super tough nylons, as they are more commonly known, are available commercially, e.g., from E.I. duPont under the tradename Zytel•ST, or may be prepared in accordance with a number of patents including, among others, Epstein, U.S. 4,174,358; Novak, U.S. 4,474,927; Roura, U.S. 4,346,926; and Joffrion, U.S. 4,251,644. These super tough nylons are prepared by blending one or more polyamides with one or more polymeric or copolymeric elastomeric toughening agents. Suitable toughening agents are disclosed in the above-identified U.S. Patents as well as in Caywood, Jr., U.S. 3,884,882, and Swiger, U.S. 4,147,740 and Gallucci et al., "Preparation and Reaction of Epoxy-Modified Polyethylene", J. APPL. POLY. SCI., V. 27, pp. 425-437 (1982). Typically, these elastomeric polymers and copolymers may be straight chain or branched as well as graft polymers and are copolymers, including core-shell graft copolymers, and are characterized as having incorporated therein either by copolymerization or by grafting on the preformed polymer, a monomer having functional and/or active or highly polar groupings capable of interacting with or adhering to the polyamide matrix so as to enhance the toughness of the polyamide polymer.

Those skilled in art will be able to provide improved thermoplastic compositions comprising various proportions of the thermoplastic elastomer (i) and the polyamide resin (ii). The compositions of the present invention will generally be comprised of from about 1 to about 99 percent by weight of the thermoplastic elastomer and from about 99 to about 1 percent by weight polyamide resin per combined weight of (i) and (ii). It is particularly preferred that about 20 to about 80 percent by weight of the component (i) and from about 80 to about 20 percent by weight polyamide resin will be used per combined weight of (i) and (ii).

The foregoing constituent ingredients can be compounded and molded by conventional means. For example, conventional thermoplastic compound technology such as single or twin screw extrusion can be utilized. The order of mixing and degree of shear experienced during extrusion can be varied. It would be expected that the physical properties could vary as such processing conditions are varied. Those skilled in the art will be able to achieve optimum processing conditions which may vary for different thermoplastic applications.

Thus in one instance, each of the ingredients could be blended and extruded at once, thereby providing thermoplastic resin having a particular property profile. Alternatively, it may be desirable to pre-blend or precompound some of the ingredients while the remaining ingredients are charged later in a compounding or extrusion process.

Additionally, conventional additives such as fillers, pigments, stabilizers, plasticizers and flame retarding compounds can be incorporated in the thermoplastic compositions of the present invention, thereby providing a variety of useful products. For fillers, both reinforcing and non-reinforcing fillers are contemplated, including glass, clay and other mineral fillers. Conventional heat and oxidative stabilizers may be used. Among the useful flame retarding compounds which may be utilized are organic and inorganic halogen and phosphous compounds with or without synergists such as, for example, antimony trioxide.

## DESCRIPTION OF THE PREFERRED EMBODIMENTS

Specific starting materials for use in the present invention can be made for the following procedures. All parts are by weight unless otherwise indicated.

## SYNTHESIS OF ADDITIVES

### PREPARATION A: CROSSLINKED ACRYLATE/CROSSLINKED INTERPENETRATING STYRENE

A thermoplastic elastomer having a crosslinked poly(butyl acrylate) phase and an interpenetrating, cross-linked polystyrene shell was prepared in a five liter, three-necked flask equipped with a heating/cooling jacket, a Teflon blade agitator, a thermometer and a nitrogen purge.

The following solutions are prepared:

| | | |
|---|---|---|
| Solution A: | n-butyl acrylate<br>1,3-butyleneglycol diacrylate | 751.4 g<br>1.27 g |
| Solution B: | Sodium Metabisulfite<br>deionized water | 1.75 g<br>27.4 g |
| Solution C: | Ammonium Persulfate<br>deionized water | 4.84 g<br>76.1 g |
| Solution D: | styrene<br>divinyl benzene | 250.6 g<br>2.65 g |
| | (55% active solution from Dow Chemical) | |

Into the reaction flask was charged: 3,450 g deionized water, the following emulsifying agents: 2.1 g Sipex UB sodium lauryl sulfate (from Alcolac, Inc.) and 4.2 g Aerosol A-268, a disodium sulfosuccinate (from American Cyanamid), and 14.6 g of Solution B. The flask was stirred with $N_2$ sparge at room temperatue for 30 minutes, to reduce the $O_2$ content.

Thereafter, 150.5 g of $N_2$ sparged Solution A was added. The flask contents were heated to 55° C and then 13.5g of Solution C was added to initiate polymerization.

After 1.5 hours of reaction, a sample showed 4.1% resin solids indicating approximately 96% conversion. The remainder of Solution A as well as 14.6 g of Solution B and 40.4 of Solution C were added. After 2.5 hours of additional reaction time at 55° C a sample showed 17.2% resin solids, indicating greater than 97% conversion.

The reaction mixture was cooled to 35° C and Solution D was added and mixed for 15 minutes at 35° C. The reaction mixture was then heated to 60° C and the reaminder of Solution C was added. The mixture was reacted for 1.25 hours. The temperature was raised to 75° C and maintained for 45 minutes. A final sample showed 22.4% resin solids indicating a converions greater than 98%.

The product latex was coagulated in a solution of 0.25 weight percent $CaCl_2$ in methanol at a rate of 1600 ml methanol per 800 ml latex. The coagulum was filtered, rinsed with fresh methanol, and dried in a vacuum oven at 60° C.

The product had a rubber content of 75% by weight, a number average latex particle diameter of 211 nanometers, a swell index in methyl ethyl ketone (MEK) of 8.1 and a percent Gel fraction from MEK extraction of 91.1%

## PREPARATION B: CROSSLINKED ACRYLATE/CROSSLINKED INTER PENETRATING STYRENE-ACRYLONITRILE COPOLYMER

A crosslinked poly(butyl acrylate) phase with an interpenetrating, crosslinked poly(styrene-coacrylonitrile) phase was prepared according to the method for Preparation A, except that 30 weight percent acrylonitrile and 70 weight percent styrene monomers were used in Solution D.

The following examples are provided to further illustrate the present invention. In these examples, various polyamide resins were mixed with an ASA thermoplastic elastomer in accordance with the present invention in varying composition ranges. The composition of these components is shown in Table 1. Modifications of these examples will be obvious to those skilled in the art without departing from the scope and spirit of this invention.

## EXAMPLES 1 - 3

A series of nylon/ASA blends were prepared by melt mixing Zytel• 330 polyamide resin (E.I. duPont) and GELOY• 1120 resin (General Electric Company) on a Werner Pfleiderer ZSK 30 twin screw extruder at

250 °C. Compositions ranging from 25 to 75 weight percent Zytel• 330 resin were generated. Prior to extrusion the polyamide component was dried for a minimum of 6 hours at 110 °C in an air circulating oven. The pelletized product was then redried under similar conditions before molding into standard ASTM test parts on a 3 oz, 70 ton Newbury injection molding machine at 480 °F. Mechanical properties were measured using standard ASTM test procedures and the results are summarized in Table 2.

## EXAMPLES 4 - 6

Examples 1 - 3 were repeated except that Trogamid T• resin (Dynamit Nobel) was substituted for Zytel• 330 resin as the nylon component. Mechanical properties for these blends are summarized in Table 2.

## EXAMPLES 7 - 9

Examples 1 - 3 were repeated except that Grilamid TR55• (Emser Industries) was substituted for Zytel• 330 as the nylon component. Mechanical properties are summarized in Table 2.

TABLE 1

| COMPONENT | CHEMICAL NAME AND MANUFACTURER |
|---|---|
| GELOY® 1120 resin | n-butyl acrylate/butylene glycol diacrylate/styrene/acrylonitrile manufactured by General Electric Company |
| Zytel® 330 resin | Poly(hexamethylene iso/terephthalamide manufactured by E.I. duPont |
| Trogamid® T resin | Poly(trimethylhexamethylene terephthalamide) manufactured by Dynamit Nobel |
| Grilamid® TR55 | A copolyamide based on isophthalic acid, bis(3-methyl-4-aminocyclohexyl) methane and laurylactam manufactured by Emser Industries |

**TABLE 2**

**Table 2: Nylon/ASA Blends and Their Properties**

| Example | Examples 1 | 2 | 3 | 4 | 5 | 6 | 7 | 8 | 9 |
|---|---|---|---|---|---|---|---|---|---|
| **Composition (parts by weight)** | | | | | | | | | |
| GELOY® 1120 resin | 25 | 50 | 75 | 25 | 50 | 75 | 25 | 50 | 75 |
| Zytel® 330 resin | 75 | 50 | 25 | | | | | | |
| Trogamid® T resin | | | | 75 | 50 | 25 | | | |
| Grilamid® TR55 | | | | | | | 75 | 50 | 25 |
| **Mechanical Properties** | | | | | | | | | |
| Tensile Strength (Kpsi) | | | | | | | | | |
| Yield | 11.9 | 9.6 | 7.7 | 11.1 | 8.8 | 7.0 | 10.0 | 8.7 | 7.1 |
| Break | 8.2 | 7.4 | 2.6 | 8.7 | 4.7 | 4.2 | 7.1 | 5.1 | 5.2 |
| Tensile Modulus (Kpsi) | 407.3 | 373.5 | 340.8 | 421.8 | 383.2 | 323.8 | 328.0 | 320.5 | 308.6 |
| Flexural Modulus (Kpsi) | 401.0 | 331.0 | 287.5 | 381.1 | 340.6 | 286.3 | 301.1 | 284.5 | 260.9 |
| Elongation (%) | | | | | | | | | |
| Yield | 6.1 | 5.4 | 4.6 | 6.6 | 5.6 | 4.3 | 6.6 | 5.9 | 4.7 |
| Break | 14.6 | 13.3 | 14.9 | 8.1 | 14.3 | 13.5 | 12.8 | 21.3 | 16.9 |
| Notched Izod Impact (Ft-lbs/in) | 1.3 | 3.0 | 1.9 | 0.7 | 0.8 | 1.0 | 1.4 | 1.5 | 6.0 |
| HDT @ 264 psi (°F) | 185.7 | 184.7 | 168.7 | 195.6 | 186.2 | 177.4 | 200.4 | 187.3 | 183.2 |

The above-mentioned patents, applications and publications are incorporated herein by reference.

Many variations of the present invention will suggest themselves to those skilled in this art in light of the foregoing detailed description. For example, a thermoplastic elastomer comprising a poly(butyl methacrylate) crosslinked phase and a crosslinked interpenetrating polystyrene or poly(vinyl toluene) phase can be used. Acrylonitrile can be replaced with methacrylonitrile. Nylon 6, 6/6, 11, 12, 6/3, 4/6, 6/4, 6/10 or 6/12 can be substituted for the polyamides used. All such obvious variations are within the full intended scope of the appended claims.

## Claims

1. A thermoplastic composition comprising:

(i) a thermoplastic elastomer comprising a crosslinked acrylate phase and an interpenetrating crosslinked phase comprising a polymerized vinyl aromatic, alone, or in further combination with a polymerized acrylonitrile; and

(ii) a polyamide resin :

2. A thermoplastic composition as defined in Claim 1 wherein (i) comprises from about 1 to about 99 percent by weight and (ii) comprises from about 99 to about 1 percent by weight per combined weight of (i) and (ii).

3. A thermoplastic composition as defined in Claim 2 wherein (i) comprises from about 20 to about 80 percent by weight and (ii) comprises from about 80 to about 20 percent by weight per combined weight of (i) and (ii).

4. A thermoplastic composition as defined in Claim 1 wherein the polyamide contains structural units of the formula

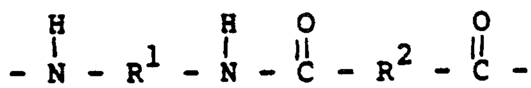

and

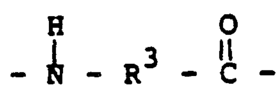

wherein $R^1$, $R^2$ and $R^3$ are the same or different divalent organic radicals selected from the group consisting of $C_2$-$C_{15}$ alkylene radicals, $C_3$-$C_{18}$ cycloalkylene radicals and $C_6$ to $C_{20}$ arylene radicals.

5. A thermoplastic composition as defined in Claim 4 wherein said polyamide is prepared by polymerization of

(a) a diamine of the formula

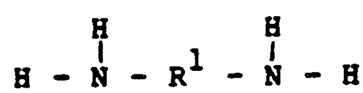

with a dicarbonyl compound of the formula

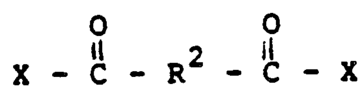

wherein X is Cl, OH, $C_1$-$C_6$ alkoxy or $C_6$-$C_{20}$ aryloxy; or

(b) a monoamino-monocarbonyl compound of the formula

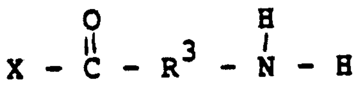

wherein X is Cl, OH, $C_1$-$C_6$ alkoxy or $C_6$ or $C_6$-$C_{20}$ aryloxy; or

(c) lactam structures of the monoamino-monocarbonyl compound of (b); or

(d) a combination of (a), (b) and (c).

6. A thermoplastic composition as defined in Claim 5 wherein the polyamide is obtained by polymerization of at aminocaproic acid, butyrolactam, pivalolactam, caprolactam, capryllactam, enantholactam, undecanolactam, dodecanolactam, 3-aminobenzoic acid and 4-aminobenzoic acid or a mixture of any of the foregoing.

7. A thermoplastic composition as defined in Claim 5 wherein the polyamide is obtained by polymerization of a diamine selected from ethylenediamine, trimethy lenediamine, tetramethylenediamine, pentamethylenediamine, 2-methylpentamethylenediamine, hexamethylenediamine, isomeric trimethylhexymethylenediamine, meta-xylylenediamine, para-xylylenediamine, 1,3-bis(aminomethyl) cyclohexane, 1,4-bis(aminomethyl)cyclohexane, 1,3-diaminocyclohexane, 1,4-diaminocyclohexane, bis(4-aminocyclohexyl)-methane, 2,2-bis(4-aminocyclohexyl) propane, 1,4-piperazine, meta-phenylenediamine, para-phenylenediamine, bis(4-aminophenyl)methane and the like or mixtures thereof; with a dicarboxylic acid selected from sebacic acid, azelaic acid, suberic acid, glutaric acid, pimelic acid, adipic acid, terephthalic acid, isophthalic acid, azelaic acid or a mixture of any of the foregoing.

8. A composition as defined in Claim 1 wherein said polyamide is selected from the group consisting of nylon 6, 6/6, 11, 12, 6/3, 4/6, 6/4, 6/10 and 6/12.

9. A thermoplastic composition composition as defined in Claim 7 wherein the polyamide is obtained by polymerization of

(a) terephthalic acid with trimethylhexamethylenediamine; or

(b) isophthalic acid with trimethylhexamethylenediamine; or

(c) adipic acid and azelaic acid with 2,2-bis-(aminocyclohexyl) propoane, or

(d) terephthalic acid with (4-aminocyclohexyl) methane; or

(e) isophthalic acid or adipic acid with hexamethylenediamine; or

(f) terephthalic acid and isophthalic acid with hexamethylenediamine.

10. A composition as defined in Claim 1 wherein said crosslinked acrylate phase is a crosslinked alkyl acrylate or alkyl methacrylate phase.

11. A composition as defined in Claim 10 wherein said alkyl acrylate is butyl acrylate.

12. A composition as defined in Claim 1 wherein said crosslinked acrylate phase comprises from about 40 to about 90 weight percent and said interpenetrating crosslinked phase comprises from about 60 to about 10 weight percent of said component (i).

13. A composition as defined in Claim 12 wherein . said crosslinked acrylate phase comprises from about 50 to about 80 weight percent of said component (i).

14. A composition as defined in Claim 1 wherein said crosslinked acrylate phase is a crosslinked poly-($C_2$-$C_{10}$ alkyl acrylate), a crosslinked poly($C_2$-$C_{10}$ alkyl methacrylate), or a mixture thereof.

15. A composition as defined in Claim 14, wherein said crosslinked acrylate phase is a crosslinked poly($C_4$-$C_8$ alkyl acrylate).

16. A composition as defined in to Claim 15, wherein said crosslinked acrylate phase is a crosslinked poly(butyl acrylate).

17. A composition as defined in Claim 1, wherein said crosslinked interpenetrating phase comprises polystyrene.

18. A composition as defined in to Claim 1, wherein said crosslinked interpenetrating phase comprises styrene copolymerized with acrylonitrile.

19. A composition as defined in Claim 1, wherein said crosslinked interpenetrating phase is at least 85 weight percent polystyrene, based on the weight of said interpenetrating phase.